(19) Europäisches Patentamt
European Patent Office
Office européen des brevets

(11) **EP 4 160 153 B1**

(12) **EUROPEAN PATENT SPECIFICATION**

(45) Date of publication and mention
of the grant of the patent:
**07.05.2025 Bulletin 2025/19**

(21) Application number: **21200261.2**

(22) Date of filing: **30.09.2021**

(51) International Patent Classification (IPC):
***G01C 21/36*** *(2006.01)*

(52) Cooperative Patent Classification (CPC):
**G01C 21/3602; G01C 21/3815; G01C 21/3833**

(54) **METHODS AND SYSTEMS FOR ESTIMATING LANES FOR A VEHICLE**

VERFAHREN UND SYSTEME ZUR FAHRSPURSCHÄTZUNG FÜR EIN FAHRZEUG

PROCÉDÉS ET SYSTÈMES D'ESTIMATION DE VOIES POUR VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.04.2023 Bulletin 2023/14**

(73) Proprietor: **Aptiv Technologies AG
8200 Schaffhausen (CH)**

(72) Inventors:
• **COLLING, Pascal
42115 Wuppertal (DE)**
• **CREMER, Peet
40239 Düsseldorf (DE)**

(74) Representative: **Manitz Finsterwald
Patent- und Rechtsanwaltspartnerschaft mbB
Martin-Greif-Strasse 1
80336 München (DE)**

(56) References cited:
• **UZER FERIT ET AL: "A Lidar-based Dual-level
Virtual Lanes Construction and Anticipation of
Specific Road Infrastructure Events for
Autonomous Driving", 2019 IEEE INTELLIGENT
VEHICLES SYMPOSIUM (IV), IEEE, 9 June 2019
(2019-06-09), pages 214 - 219, XP033606188, DOI:
10.1109/IVS.2019.8814201**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD

The present disclosure relates to methods and systems for estimating lanes for a vehicle.

BACKGROUND

Digital imaging devices, such as digital cameras, are commonly used in automotive applications to detect lanes for a vehicle. An accurate and reliable lane detection is essential e.g., for automated driving or highway pilots. HD maps, i.e. maps with a high definition, can be created, using detections of traffic signs, lanes, road boundaries, and other objects of interest based on data from camera sensors. However, under bad weather conditions, e.g. when it is raining, detection methods based on camera data often fail.

Accordingly, there is a need to improve the quality and reliability of lane detections for a vehicle.

Uzer Ferit et al: "A Lidar-based Dual-level Virtual Lanes Construction and Anticipation of Specific Raad Infrastructure Events for Autonomous Driving", 2019 IEEE INTELLIGENT VEHICLES SYMPOSIUM (IV), IEEE, 9 June 2019, pages 214-219, DOI: 10.1109/1VS.2019.8814201 discloses a dual-level lidar-based virtual lanes construction and anticipation method of specific road infrastructure events for autonomous driving.

SUMMARY

The present disclosure provides a computer implemented method, a computer system and a non-transitory computer readable medium according to the independent claims. Embodiments are given in the subclaims, the description and the drawings.

In one aspect, the present disclosure may be directed at a computer implemented method for estimating lanes for a vehicle, wherein the method comprises the following steps performed (in other words: carried out) by computer hardware components: determining a first preliminary estimate of lanes based on a plurality of lane markings at a location of the vehicle; determining a second preliminary estimate of lanes based on a plurality of trails of objects at the location of the vehicle; comparing the first preliminary estimate of lanes and the second preliminary estimate of lanes, wherein the comparing comprises a lane cross check of the first preliminary estimate of lanes and the second preliminary estimate of lanes to obtain information of which lanes are actually drivable, non-blocked, and/or obstacle-free; and determining a final estimate of lanes at the location of the vehicle ,including information whether these lanes may actually be used, based on the comparing.

In other words, the final estimation of lanes at a location of the vehicle is determined by comparing and determining two preliminary estimates of lanes at the location of the vehicle. The first preliminary estimation of lanes is based on a plurality of lane markings. An "estimation of lanes" may also be referred to as "estimated lane". The second preliminary estimated lanes is based on a plurality of trails of other road using objects. A lane may be a path where a road user, e.g. a vehicle, a bicycle, a bike, or the like, may be able to drive. Lane markings may comprise visible markings on a road surface, for example markings that separate traffic lanes or markings that limit a road on each side. In other words, lane markings may determine where it is possible and allowed to drive on a road. Trails of the objects may describe object trajectories, i.e. trails may specify where an object has moved on the road. Trails may be determined by recording a position or a location of an object at different successive points in time and by combining the position or the location of the object. A trail of an object may be a line string, i.e. an ordered list of coordinates of the object's center point, with additional information, for example, a bounding box around the object's center point with information of the size (length and width) and rotation of the objects.

According to an embodiment, the plurality of lane markings may be determined based on first sensor data, wherein the first sensor data may be determined using a first sensor, wherein preferably the first sensor may comprise a camera or a LiDAR sensor. Sensor data recorded by a camera may be used to detect RGB (red - green - blue) information having extremely high resolution. On the other hand, a LiDAR sensor may measure a range or a distance between the sensor and an object. The object may be another road user, preferably another vehicle. Sensor data from a LiDAR sensor may comprise an azimuth and an elevation angle of a vehicle or an object relatively to the sensor. The sensor data recorded from the LiDAR sensor may be very detailed and may include fine and accurate information about objects at a great distance. Ambient lighting may not influence the quality of the captured information by LiDAR, thus the results at day and night may be provided without loss of performance due to disturbances such as shadows, sunlight or headlight glare.

According to an embodiment, the plurality of trails of the objects may be determined based on second sensor data, wherein the second sensor data may be determined using a second sensor, wherein preferably the second sensor may comprise a camera or a radar sensor or a LiDAR sensor. Sensor data recorded by radar sensors, for example a distance, a direction or a relative speed of vehicles or objects, are impervious to adverse or bad weather conditions, i.e. radar sensors work reliably in dark, wet or even foggy weather.

According to an embodiment, the method may further comprise the following step carried out by the computer hardware components: determining the location of the vehicle. The location of the vehicle may be a position of the vehicle described in a coordinate system.

The position (and/or the location) may be point or an area. The accuracy of the position or the location of an object may be dependent on the method used for determining the position or the location of the object. The position or the location of the vehicle may refer to center of gravity of the vehicle or another defined point of the vehicle, for example a location of a sensor mounted at the vehicle. The coordinate system may be a world coordinate system (WCS), wherein the world coordinate system may be a geographic coordinate system. The geographic coordinate system may allow to define a geographic position of an object, i.e. the position of the object on Earth. The geographic positions may be described by spherical coordinates (latitude, longitude, and elevation), or by map coordinates projected onto a plane, or by earth-centered, earth-fixed (ECEF) Cartesian coordinates in three dimensions.

According to an embodiment, the location of the vehicle may be determined based on simultaneous localization and mapping and/or a GPS system and/or a dGPS system and/or an inertial measurement unit. Simultaneous localization and mapping (SLAM) may be a method that builds a map and localizes an object, for example a vehicle, in that map at the same time. SLAM may allow the vehicle to map out unknown environments and may be used for path planning of autonomous vehicles and obstacle avoidance. Global position systems (GPS) or differential global position systems (dGPS) are satellite-based navigation systems that provide location information and time information of an object on Earth. Thus, the position of moving objects may be determined by GPS or dGPS. A dGPS system may be an enhancement over GPS. dGPS may provide correction signals to correct an error of a GPS signal, caused by time shifts. For generating these correction signals, dGPS may use fixed stations on the ground with precise known positions. Time errors and distance errors of the signals of satellites may be measured with these stations and used for positioning corrections of an object. An inertial measurement unit (IMU) may include very precise accelerometers and gyroscopes to estimate the acceleration and yaw rate of an object in three dimensions. Also, if the vehicle may enter areas such as tunnels where no or weak GPS signals are available, the IMU may deliver data to keep track of the vehicle's movements. Using the correction signals of an inertial measurement unit may allow to achieve a high accuracy, for example of 10 cm, for position estimation which may be used for autonomous driving systems.

According to an embodiment, the method may further comprise the following step carried out by the computer hardware components: detecting a pose of the vehicle in a world coordinate system. The pose of the vehicle may be an orientation of the vehicle. The orientation of the vehicle may be determined by three Euler angles (a yaw angle, a pitch angle and a roll angle) with respect to a fixed coordinate system, for example a world coordinate system.

According to an embodiment, the method may further comprise the following step carried out by the computer hardware components: estimating uncertainties of the first preliminary estimate of lanes and/or of the second preliminary estimate of lanes. Uncertainties may be estimated by any appropriate method, which may provide an uncertainty information, for detection and tracking of the lane markings. For example, uncertainties may be given or obtained using a Kalman filter or a Particle filter. Furthermore, or otherwise, uncertainties may be defined separately, for example, detected lane markings nearby the vehicle may have lower uncertainties than lane markings detected far away of the vehicle. Lane markings far away of the object may have higher uncertainties than lane markings around the vehicle. In the same way, uncertainties of trails may be estimated. Either given or obtained by the used method or defined separately. For example, a trail far away from the vehicle may have a higher uncertainty than a trail next to the vehicle.

According to an embodiment, the plurality of lane markings may be determined from several drives of the vehicle and/or from several drives of a plurality of recording vehicles. In other words, sensor data for determining the plurality of lane markings at a location of the vehicle may be determined by a sensor mounted at the vehicle. The vehicle may drive multiple times the same route to capture lane markings at same positions several times. Another possibility may be that a plurality of vehicles, i.e. not only the vehicle itself, may determine by sensors mounted at the plurality of vehicles lane markings at the positions of the plurality of vehicles. Thus, it may be possible to obtain a plurality of lane markings at a position in a short period of time.

According to an embodiment, the plurality of trails may be determined from several drives of the vehicle and/or from several drives of a plurality of recording vehicles. In other words, sensor data for determining the plurality of trails at a location of the vehicle may be determined by a sensor mounted at the vehicle. The vehicle may drive multiple times the same route to capture trails of other vehicles at same positions several times. Another possibility may be that a plurality of vehicles, i.e. not only the vehicle itself, may determine by sensors mounted at the plurality of vehicles trails of other road user, like other vehicles, at the positions of the plurality of vehicles. Thus, it may be possible to obtain a plurality of trails at a position in a short period of time.

According to an embodiment, the method may further comprise the following step carried out by the computer hardware components: checking a first plausibility of the first preliminary estimate of lanes and/or checking a second plausibility of the second preliminary estimate of lanes, wherein the first plausibility and/or the second plausibility may be based on geometric relations and/or rules. Rules may be given by legislation, for example speed limit or traffic regulations like one-way roads. Geometric relations may be considered in road construction such as a maximum possible curve radius. Also, the width of lanes may be determined by geometric relations.

According to an embodiment, a number of trails in the plurality of trails of objects may be above a predetermined trail threshold. The predetermined trail threshold may be a minimum number of estimated trails of objects that may be needed for a robust and accurate application of the method described herein. The minimum number may be dependent on the road type, for example, on highways a lower predetermined trail threshold may be sufficient than on urban roads.

According to an embodiment, a number of lane markings in the plurality of lane markings may be above a predetermined lane marking threshold. The predetermined lane marking threshold may be a minimum number of estimated lane markings that may be needed for a robust and accurate application of the method described herein. The minimum number may be dependent on the road type, for example, on highways a lower predetermined lane marking threshold may be sufficient than on urban roads.

In another aspect, not falling under the claimed invention, the present disclosure is directed at a computer implemented method for estimating lanes for a vehicle, the method comprises the following steps carried out by computer hardware components: vehicle; transforming the measurement data of the sensor into a global coordinate system to obtain transformed measurement data; and estimating lanes at the location for the vehicle based on the transformed measurement data.

In other words, the measurement data at a location of the vehicle, captured by a sensor mounted at the vehicle, may directly be transformed into a global coordinate system, for example a world coordinate system, before estimating lanes at the location based on the transformed measurement data. The measurement data may be sensor data of the first sensor and/or the second sensor as described above, but is not limited to that. The measurement data may be sensor data from a different sensor, i.e. not the first sensor or second sensor. The estimated lanes may be lanes on a road where a road user may be able to drive. The global coordinate system may be the same as described above, preferably a world coordinate system based on GPS coordinates.

Using an inaccurate localization system may result in errors in the localization. This may manifest, for example, in inaccurate transformation matrices for the transformation from a vehicle coordinate system into a global coordinate system. According to various embodiments, the transformation from the vehicle coordinate system into the global coordinate system (GCS) may be applied before tracking (for example before tracking of lane markings and/or before tracking of trails), so that tracking is performed in the GCS; then, the positions of the trails and lane markings may jitter more due to the reduced quality of the transformation into the GCS. According to various embodiments, the jitter may be reduced by tracking (in other words, jitter may implicitly be reduced by the tracking, which may implicitly compensate for jitter in a time series of sensor data; in yet other words: a tracker may at least partially compensate and smooth out localization system errors), and/or by applying (or considering) physical crosschecks (for example crosschecks related to reasonable maximum values for acceleration and/or velocity vectors of vehicles, crosschecks for curvatures of lanes) to remove outliers (for example due to localization errors), as will be descried below. Summing up, if tracking is performed in the local coordinate system (e.g. the vehicle coordinates system), then tracking may be easier but a compensation of inaccurate localization may not be possible. The tracking in the global coordinate system on the other hand, may be extended by physical crosschecks or properties of the detected objects. The tracker then may output the uncertainties given for example by the Kalman filter or the Particle filter or an uncertainty defined by any other method.

According to an embodiment, the measurement data may comprise estimates for lane markings. Lane markings may comprise visible markings on a road surface, for example markings that separate traffic lanes or markings that limits a road on each side. In other words, lane markings may determine where it is possible and allowed to drive on a road. The estimates for lane markings may be the same as described above, but are not limited to them.

According to an embodiment, the measurement data may comprise estimates for trails of objects. Trails of the objects may describe object trajectories, i.e. trails may specify where an object has moved on the road. Trails of the objects may describe object trajectories, i.e. trails may specify where an object has moved on the road. Trails may be determined by recording a position or a location of an object at different successive points in time and by combining the position or the location of the object. The estimates for trails of an object may be the same as described above, but are not limited to them.

According to an embodiment, the measurement data may be determined from several drives of the vehicle and/or from several drives of a plurality of recording vehicles. In other words, the measurement data may be determined by at least one sensor mounted at the vehicle. The vehicle may drive multiple times the same route to capture measurement data multiple times at the same location of the vehicle using the at least one sensor. Another possibility may be that a plurality of vehicles, i.e. not only the vehicle itself, may drive the same route (once ore for several times). Thus, the at least one sensor of each of the vehicles may determine measurement data at the same location. Thus, it may be possible to obtain a plurality of measurement data at a position in a short period of time.

According to an embodiment, the sensor may comprise a radar sensor and/or a camera. As described above, radar sensors are impervious to adverse or bad weather conditions, working reliably in dark, wet or even foggy weather. They are able to identify the distance, direction and relative speed of vehicles or other objects. Measurement data from a camera may be used to detect RGB (red-green-blue) information with extremely high resolution.

According to an embodiment, the method may further comprise the following step carried out by the computer hardware components: determining the location of the vehicle. The location of the vehicle may be a position of the vehicle described in a coordinate system. The accuracy of the position or the location of an object may be dependent on the method used for determining the position or the location of the object. The position or the location of the vehicle may refer to center of gravity of the vehicle or another defined point of the vehicle, for example a location of a sensor mounted at the vehicle. The coordinate system may be a world coordinate system (WCS), wherein the world coordinate system may be a geographic coordinate system.

According to an embodiment, the determining of the location of the vehicle may be based on simultaneous localization and mapping and/or a GPS system and/or a dGPS system and/or an inertial measurement unit.

According to an embodiment, the method may further comprise the following step carried out by the computer hardware components: checking a plausibility of the lanes, wherein the plausibility may be based on physical assumptions regarding a driving behavior of the vehicle and/or physical assumptions regarding a driving behavior of other vehicles.

According to an embodiment, the physical assumptions regarding the driving behavior of the vehicle may comprise assumptions regarding a velocity of the vehicle and/or assumptions regarding a yaw rate of the vehicle. Physical assumptions regarding the driving behavior of the vehicle may comprise correlations between movement data of the vehicle and geometrical constraints.

For example, a maximum velocity or yaw rate of the vehicle in a curve of the road with a predetermined radius. The yaw rate may be an angular rate, angular velocity or yaw velocity of the vehicle and describe the velocity of the vehicle's rotation around the yaw axis, or a rate of change of the heading angle around the yaw axis of the vehicle. The yaw rate is commonly measured in degrees per second or radians per second. The yaw axis of the vehicle may describe the direction perpendicular to the direction of motion of the vehicle, pointing upwards perpendicular to the street.

According to an embodiment, the physical assumptions regarding the driving behavior of the other vehicles may comprise an acceleration assumption of the other vehicles and/or a braking assumption of the other vehicles and/or a yaw-rate assumption of the other vehicles. The physical assumptions as describe above may be also valid for the other vehicles, and vice versa.

According to an embodiment, the method may further comprise the following step carried out by the computer hardware components: estimating uncertainties of the transformed measurement data.

According to an embodiment, the lanes may be estimated further based on weights with a confidence value. Uncertainties of lanes may be computed for the defining properties of the lanes such as position and curvature. These statistical measures may be computed from the statistical moments (for example mean and variance) of the trails. The calculation may comprise the following steps: a lane candidate may be initialized at the center of a high-density region, if there is a high density of trails around a spatial position (e.g. measured by a moving window); the trails in the vicinity of the lane candidate may be associated to the candidate; some trails may agree more with the lane candidate than others, therefore, by taking a window around the lane candidate, the mean and variance of position and curvature of the trails in the window may be estimated; the mean and variance of these measures may then provide the uncertainties of the lane. The confidence value may be defined as a reciprocal value of the uncertainty (for example the confidence value may be one minus the uncertainty). The uncertainty or the confidence value may be used as a weight. A lane with a higher confidence (lower uncertainty) may be more important and thus may have a higher weight than a lane with a lower confidence (higher uncertainty).

In another aspect, the present disclosure is directed at a computer system, said computer system comprising a plurality of computer hardware components configured to carry out several or all steps of the computer implemented method as claimed.

The computer system can be part of a vehicle.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In an embodiment, the present disclosure may be directed to a vehicle, comprising the computer system as claimed and at least one sensor, wherein the plurality of lane markings and/or the plurality of trails may be determined based on an output of the at least one sensor. The at least one sensor may be a camera, a radar sensor or a LiDAR sensor.

In another embodiment, the present disclosure may be directed to a vehicle, comprising the computer system and the sensor, wherein the measurement data may be determined based on an output of the sensor. The sensor may be a camera, a radar sensor or a LiDAR sensor.

In another aspect, the present disclosure is directed at a non-transitory computer readable medium comprising instructions for carrying out several or all steps or aspects of the computer implemented method as claimed. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at an unclaimed computer program for instructing a computer to perform several or all steps or aspects of the computer implemented methods described herein.

It is understood that features described in connection with the methods can be realized in the computer system as well as the non-transitory computer readable medium and vice versa.

DRAWINGS

Exemplary embodiments and functions of the present disclosure are described herein in conjunction with the following drawings, showing schematically:

Fig. 1A     a flow diagram illustrating a method for estimating lanes for a vehicle according to various embodiments;

Fig. 1B     a flow diagram illustrating a method for estimating lanes for a vehicle comparing a first preliminary estimate of lanes and a second preliminary estimate of lanes;

Fig. 2     a flow diagram illustrating a comparison of a first preliminary estimate of lanes and a second preliminary estimate of lanes;

Fig. 3A, 3B     a lane estimation based on estimated lane markings and estimated trails;

Fig. 3C, 3D     a lane estimation based on estimated trails;

Fig. 3E     a lane estimation based on estimated lane markings and estimated trails, considering drivability of lanes;

Fig. 3F     a lane estimation based on estimated trails, considering an object detection based on the estimated trails;

Fig. 3G     a lane estimation based on estimated lane markings and estimated trails, considering a variance of estimated trails;

Fig. 4     a flow diagram illustrating a method for estimating lanes for a vehicle based on transforming measurement data into a global coordinate system;

Fig. 5     a flow diagram illustrating a method for estimating lanes for a vehicle according to various embodiments;

Fig. 6     a flow diagram ilustrating a method for estimating lanes for vehicle according to examples not falling under the claimed invention; and

Fig. 7     a computer system with a plurality of computer hardware components configured to carry out steps of a computer implemented method for estimating lanes for a vehicle to various embodiments.

DETAILED DESCRIPTION

Lane estimation may be based on different sensor data (e.g., camera, radar sensors and/or LiDAR sensors) and may use neural networks or classical methods not based on machine learning. High Definition (HD) lane maps may be generated for a given region or a location of a vehicle based on sensor data of many recording drives of recording vehicles using a method for Lane Map Aggregation (LMA). This may require a global localization in a global coordinate system (GCS) of the recording vehicles since the lanes must be given in the GCS as well. The (recording) vehicles may record various sensor data e.g., data from a camera, a LiDAR sensor and/or a radar sensor. Based on this data, lanes estimates may be derived from different detections e.g., from camera based or LiDAR based lane marking detections and/or from LiDAR based or radar based object detections and trackings, yielding trails of other vehicles. Thus, multiple lane estimates may be obtained for estimating a true lane. The multiple estimates of lanes - from multiple recording drives and/or multiple and different detections - may be used to get a reliable estimate of lanes and their position by aggregating the multiple estimates of lanes.

Therefore, lane map aggregation may be a process of combining multiple object detections or landmark detections from multiple recording drives of the same location into a single, more robust representation.

The process may include determining a first preliminary estimate of lanes based on a plurality of lane markings at a location of the vehicle by aggregating the plurality of lane markings detected from several drives of the vehicle and/or from several drives of a plurality of recording vehicles. Further, the process may include determining a second preliminary estimate of lanes based on a plurality of trails of objects at the location of the vehicle by aggregating the plurality of trails of objects detected from several drives of the vehicle and/or from several drives of a plurality of recording vehicles. Then the (aggregated) preliminary estimates of lanes with the information where they are based on (lane markings or trails) may be evaluated to get a final estimate of lanes with a confidence score. The aggregation may be for instance a geometric mean of the plurality of lane markings or trails or an arithmetic mean of the plurality of lane markings or trails. The confidence score may be an output of a lane function l(t) or l(t, m), which may take as input a vector containing the (aggregated) trails information or the (aggregated) trails information and (aggregated) lane markings information and may output a confidence value for the lane estimate. Thus, the confidence score may be derived by criterias of the aggregated lane markings and trails and additional information, for example, how many trails are used in the aggregation and from how many recordings the trails are estimated. The confidence of the final lane estimation may give information on whether the specified lane is drivable, i.e. non-blocked. The evaluation includes a comparison of the first preliminary estimate of lanes and the second preliminary estimate of lanes and a determination of a final estimate of lanes at the location of the vehicle based on the comparison.

In other words, the process describes a robust map-aggregated estimation of lanes based on the combination of two subsystems. One subsystem is based on lane markings detection, wherein data obtained by a LiDAR sensor or a camera may be used. The plurality of thereby estimated preliminary lane markings from possibly several recording drives of the vehicle and/or several recording drives of other recording vehicles are then aggregated in a first preliminary estimate of lanes. The other subsystem follows a different approach and estimates lanes based on object trails. These object trails may become available through an object detection method (e.g., LiDAR and/or camera and/or radar based). The trails of other road users are then aggregated to describe another set of estimated lanes, a second preliminary estimate of lanes. Subsequently, both sets of estimated lanes for an area or a location around the vehicle from the two subsystems are then compared, such that each estimation method may benefit from the results of the other. This may result in a reliable final estimate of lanes at the location of the vehicle compared to when using only a single lane detection method and allows to infer additional information such as whether a lane is blocked or drivable.

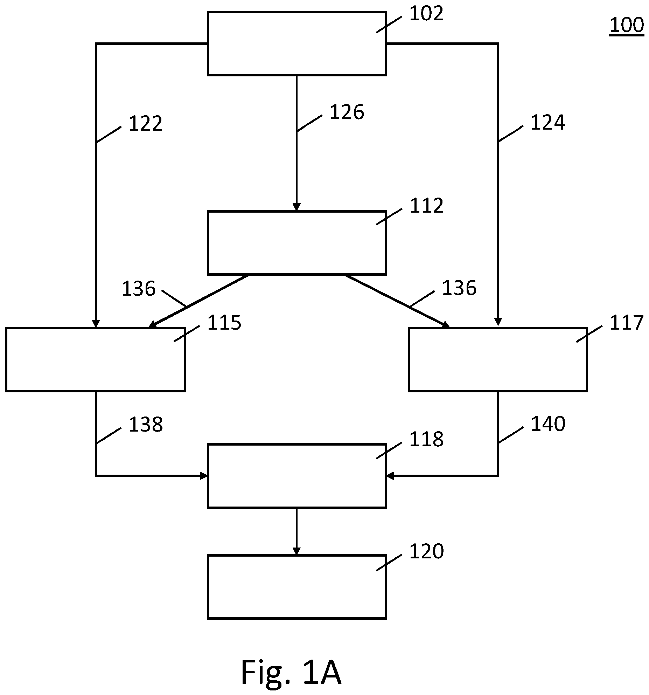

Fig. 1A shows a flowchart illustrating a method for estimating lanes for a vehicle according to various embodiments. At 102, sensor data 122, 124, 126 may be determined using a first sensor and a second sensor. At 112, using a localization system, a position 136 may be estimated in a world coordinate system based on sensor data 126. At 115, lanes from lane markings are estimated based on the sensor data 122 and the position estimates 136. At 117, lanes from trails are estimated based on the sensor data 124 and the position estimates 136. At 118, the estimated lanes 138 from lane markings and the estimated lanes 140 from trails are compared. At 120, the final estimate of lanes are determined based on the comparing of step 118. A detailed description of the steps will follow below.

According to one embodiment the method of estimating lanes for a vehicle may be based on determining map-aggregated road lanes by cross-checking two lane detection and estimation systems. The method comprises the following steps carried out by computer hardware components: running a lane marking detection method to detect lanes as one subsystem; running an object detection method to detect other road users as another subsystem; aggregating the lane markings of the lane marking subsystem in a global map (using a localization system) to obtain estimates for where the lanes are; aggregating trails of other road users obtained from the object detection subsystem in a global map (using a localization system) to get a separate, independent estimate for where the lanes are; and cross-checking the lanes coming from both subsystems to obtain information of which lanes are actually drivable, non-blocked, and/or obstacle-free.

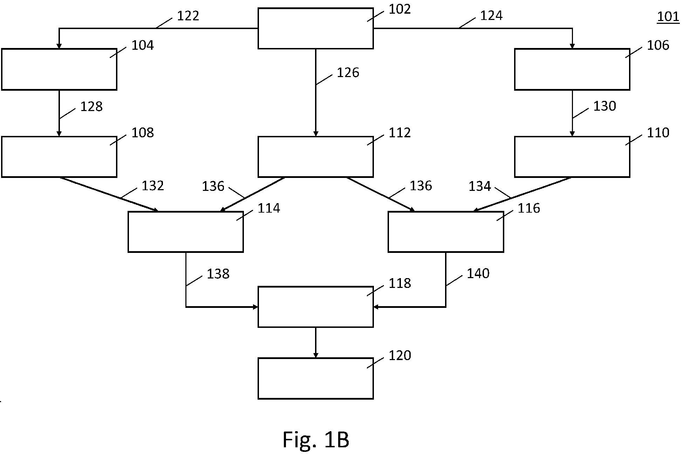

According to one embodiment the method of estimating lanes for a vehicle based on two subsystems is described in the following detailed description of Fig. 1B.

Fig. 1B shows a flow diagram 101 illustrating a method for estimating lanes for a vehicle comparing a first preliminary estimate of lanes and a second preliminary estimate of lanes. At 102, sensor data 122, 124, 126 may be determined using a first sensor and a second sensor. The first sensor and/or the second sensor may be mounted at the vehicle or may be mounted at other recording vehicles that may be different from the vehicle. The vehicle and/or the other vehicles may be part of a vehicle fleet, for example a vehicle fleet of a company. The sensor data 122, 124, 126 may be determined from several drives of the vehicle and/or from several drives of a plurality of recording vehicles. At 104, a position and a type of lane markings may be determined based on the sensor data 122. Therefore, an appropriate method may be used, e.g. an image recognition method with neural networks or a classical method not based on machine learning. The sensor data 122 may be determined using a camera and/or a LiDAR sensor, or any other suitable sensor. At 108, estimates of lane markings 128 obtained from a plurality of sensor data 122 may be tracked using a tracker. The tracker may identify an object (for example lane markings or another road user) over multiple frames. A plurality of lane markings 132 may include uncertainty estimates of those lane markings (e.g. determined by a standard deviation method), wherein the uncertainty estimates for the lane markings may be determined, for example, by the tracker. The tracker may provide an uncertainty value. For example, a tracker using a Kalman filter or a Particle filter may provide uncertainty information or these uncertainties may be obtained. Otherwise, the uncertainty values may also be defined separately.

At 106, objects around the vehicle, preferably other road users, may be determined based on the sensor data 124. The objects may be other vehicles or bicycles or the like. The sensor data 124 may be determined using a radar sensor and/or a LiDAR sensor, or any other suitable sensor. At 110, the object estimates 130 determined from a plurality of sensor data 124 may be tracked using a tracker. Thus, trajectories or trails of the other road users, preferably other vehicles, may be determined. A plurality of trails 134 may include uncertainty estimates of those trails (e.g. determined by a standard deviation method), wherein the uncertainty estimates for the trails may be determined, for example, by the tracker.

At 112, a position and a pose of the vehicle may be determined in a world coordinate system based on sensor data 126. To determine the position and/or the pose of the vehicle, hardware such as a dGPS system, or an appropriate method such as an elaborate simultaneous localization and mapping (SLAM) may be used. SLAM systems may be based on camera sensors, LiDAR sensors, radar sensors, ordinary GPS sensors or a combination of those sensors. Additional, inertial measurement unit (IMU) sensors may be used for better performance.

At 114, the plurality of estimated lane markings 132 may be aggregated, wherein uncertainties may be considered. The uncertainties of the estimates may be used as a weight in the aggregation, wherein the aggregation may be for instance a weighted average (or weighted mean) of the plurality of estimated lane markings 132. In other words, the plurality of estimated lane markings 132 may be combined from several drives and/or from several drives of multiple recording vehicles recorded at the same position 136 to determine a combined, more accurate estimate of the lane markings at this position 136. The combined or aggregated lane markings are used to determine a first preliminary estimate of lanes 138.

At 116, the plurality of estimated trails 134 may be aggregated, wherein uncertainties may be considered. The uncertainties of the estimates may be used as a weight in the aggregation, wherein the aggregation may be for instance a weighted average (or weighted mean) of the plurality of estimated trails 134. In other words, the plurality of estimated trails 134 may be combined from several drives and/or from several drives of multiple recording vehicles recorded at the same position 136 to determine a combined, more accurate estimate of where other road users may have driven at this position 136. The combined or aggregated trails are used to determine a second preliminary estimate of lanes 140 based on a distribution of the trails.

At 118, the first preliminary estimated lanes 138 from lane markings and the second preliminary estimated lanes 140 from trails are compared. The first preliminary estimated lanes 138 indicate where lanes are according to the available information about lane markings. Lane markings may not necessarily have to coincide with drivable lanes. In many situations, lane markings could be visible, but the lane would still not be drivable because there is an obstacle, a construction area, or a prohibition to use the lane. The second preliminary estimated lanes 140 give an indication on where other road users have driven and thereby may give a hint on which lane might actually be usable.

At 120, the final estimate of lanes is determined based on the comparing of step 118. Combining the two methods, i.e. estimating lanes based on a plurality of lane markings and estimating lanes based on a plurality of trails, an accurate position of lanes (by lane markings) together with the information whether these lanes may actually be used is received. In addition, the lane estimates may be more robust by combining a lane marking detection method based on one sensor with a trail detection method based on another sensor with another working principle. For example, the lane marking detection may be based on data observed by a camera while the trail detection may be based on data observed by a LiDAR sensor. Those sensors may have different failure modes. When these two methods are combined as described herein, reliable lanes may be estimated in most circumstances.

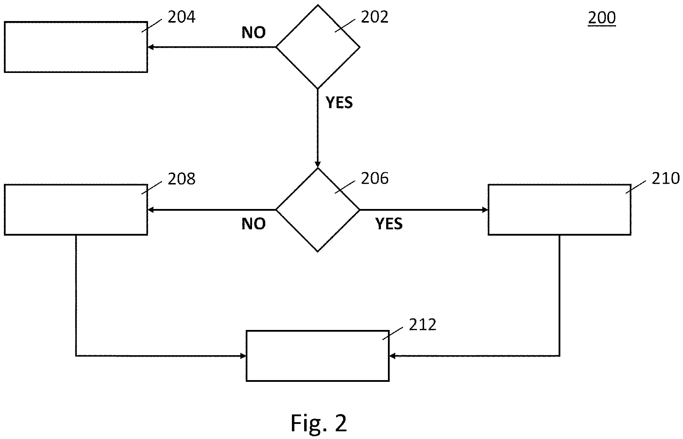

Fig. 2 shows a flow diagram 200 illustrating a comparison of the first preliminary estimate of lanes and the second preliminary estimate of lanes. At 202, it may be checked whether the second preliminary estimated lanes based on a plurality of trails are available. This may be the case if a minimum number of trails, i.e. trajectories of tracked vehicles, with respect to the number of recording drives is available. Depending on the environment, the number of trails might be different. For example, on highways there is in general more traffic. Thus, the minimum number of trails may be e.g., 8 trails from 10 recordings of a specific location on highways. For a sub-urban environment, the minimum number of trails may be e.g., 5 trails from 10 recordings as such an environment may have less traffic. The difference according to the location of the vehicle may ensure to have a minimum number of trails. The minimum number of trails may be a predetermined trail threshold.

At 204, if there are no second estimated lanes based on a plurality of trails available or the number of second estimated lanes based on a plurality of trails is below the predetermined trail threshold, the process of estimating lanes as described herein will be terminated. More recordings of the same location may be needed for estimating lanes for the vehicle.

At 206, if second estimated lanes based on a plurality of trails are available and the number of second estimated lanes based on a plurality of trails is above the predetermined trail threshold, there is a request whether first preliminary estimates of lanes based on a plurality of lane markings are available. That may be the case for a position or location or area of the vehicle if e.g., at least 80% or at least 90% of the recording drives contain lane markings detections. Because some environments may not contain lane markings, the definition of a predetermined number of estimated lanes based on lane markings may ensure that there are really lane markings available. Furthermore, the predetermined lane marking threshold may avoid that the lane marking detections are only false positives e.g., if in only 1 of 10 recordings a lane marking detection is given.

At 208, if no first preliminary estimates of lanes based on a plurality of lane markings are available or the number of first preliminary estimates of lanes based on a plurality of lane markings is below the predetermined lane marking threshold, the determination of the final estimate of lanes 212 may only be based on the second preliminary estimation of $l(t) : \mathbb{R}^n \longrightarrow [0,1]$ lanes based on the trails by a basic lane function l($t$), wherein t may describe a dependency of estimated lanes based on trails. Mathematically l($t$) may be a function which may take as input a vector containing the (aggregated) trail information and may output a confidence value for the lane estimate.

At 210, if first preliminary estimates of lanes based on a plurality of lane markings are available and the number of first preliminary estimates of lanes based on a plurality of lane markings is above the predetermined lane marking threshold, a comparison of the first preliminary estimate of lanes and the second preliminary estimate of lanes is performed to determine the final estimated lanes 212.

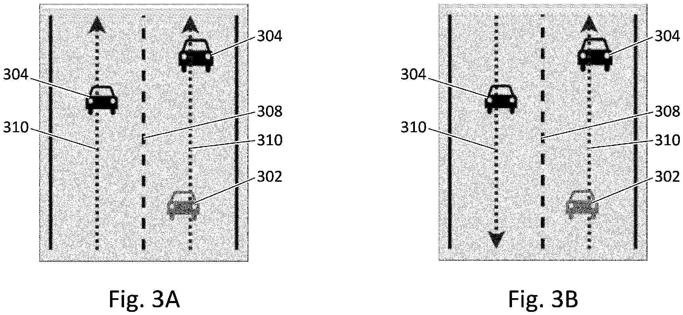

The comparison may be divided in multiple scenarios, which may be expressed with a lane function l($t$, $m$), wherein $t$ may describe a dependency of estimated lanes based on trails and $m$ may describe a dependency of estimated lanes based on lane markings. Mathematically l($t$, $m$) may be a function $l(t,m) : \mathbb{R}^i \longrightarrow [0,1]$ which may take as input a vector containing the (aggregated) trail information and lane markings information and may output a confidence value for the lane estimate. In other words, the lane function l($t$, $m$) may take input information from the corresponding lane detection e.g., number of lanes with respect to the number of recordings and the estimated uncertainties from the estimated lanes based on lane markings and estimated lanes based on trails. For example, if there are lane estimates from trails and lane estimates from lane markings with high confidences, but both lanes intersect, then the true lane may be blocked. If both, the lane estimates from trails and the lane estimates from lane markings, do not intersect and have a logical distance to each other and are in parallel then the true lane may be confident. The lane function l($t$, $m$) may be deterministic by identifying predefined scenarios (as shown in Figs. 3A to 3G) or may also be based on an artificial intelligence (AI) model like neural network.

The output of steps 208 or 210 may be a final estimate of lanes 212 at the location of the vehicle with a confidence value, wherein the confidence value may consider if the final estimate of lanes may be drivable lanes, i.e. for example not blocked by an object or due to traffic jam. Every lane estimate output of the system may provide a confidence value which has to be defined. Thus, the confidence value may depend on the number of recordings.

The method described herein may lead to a reliable lane estimation due to the combination of different methods (lane markings detection method and object detection method), which may use different sensors (e.g., camera, radar sensors and/or LiDAR sensors). It has been found that the aggregation of lanes obtained from multiple drives along the same route using an accurate localization system may lead to a reliable lane estimation for the same location. Also, additional information about the drivability of lanes by combining the information about the behavior of other road users with accurate lane information may provide a reliable lane estimation.

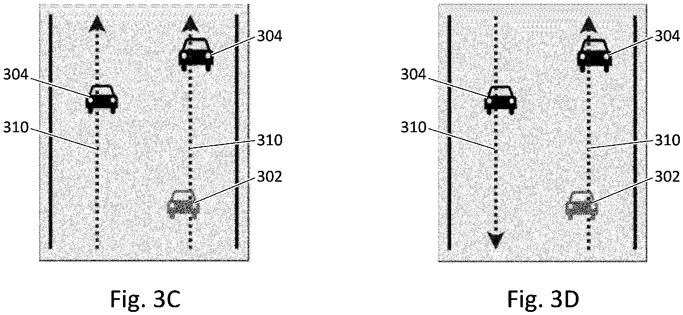

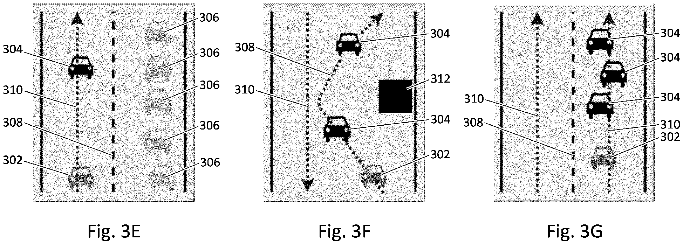

Figs 3A to 3G depict some scenarios where a lane cross-check, i.e. a comparison of estimated lanes based on lane markings and estimated lanes based on trails, yields more reliable final estimated lanes for a vehicle 302 compared to when not using the cross-check, i.e. only using a single lane detection method. Fig 3A and Fig. 3B show a lane estimation for a vehicle 302 based on estimated lane markings 308 and estimated trails of moving vehicles 304. Lane markings 308 indicate the lanes, and trails of the moving vehicles 304 indicate the lanes as well, but the lanes with driving direction 310 are provided by the trails of moving vehicles 304 only. Fig. 3C and 3D show a lane estimation based on estimated trails of moving vehicles 304, if no lane markings 308 are available. Therefore, the final estimated lanes are based on trails of the moving vehicles 304, which also provide information about the driving direction. Fig. 3E shows a lane estimation based on estimated lane markings 308 and estimated trails of moving vehicles 304, considering a drivability of the estimated lanes. Based on the preliminary estimated lanes based on lane markings 308, there are two lanes finally estimated. But the trails indicate that only the left lane is actually drivable, since the right lane is blocked by static vehicles 306. This scenario may be typically for cities, for example, when parking vehicles may block a lane or there is a traffic jam on a turning lane. Fig. 3F shows a lane estimation based on estimated trails of moving vehicles 304, considering detecting an obstacle 312 based on the estimated trails of the moving vehicles 304. Based on the preliminary estimated lanes based on the trails of the moving vehicles 304, the obstacle 312 may be detected, and the final estimated lanes may be adjusted. Fig. 3G shows a lane estimation based on estimated lane markings 308 and estimated trails of moving vehicles 304, considering a variance of estimated trails. In the case that the more dynamic trails have a high variance such that the lane may not easily be extractable, the more static preliminary lane estimations based on lane markings 308 may be used to adjust the preliminary lane estimations based on the trails for the final estimation of lanes.

The lane cross-check may also include a logical sanity check to identify and handle an unplausible constellation of multiple lane detections. The road system may follow specified rules, that may be defined by convention or even legislation, which may be considered. In a mathematical sense on the other hand, the lanes and lane markings as well as the trails may follow geometric relations and rules. Therefore, situations may be detected where the geometric description may not match typical rules of a road system and this information may be used to discard unplausible lanes. For example, for a road consisting of two lanes, the lanes need to be in parallel and are required to have a specific distance to each other such that vehicles can drive on both lanes without crashing into each other. If there is a lane estimation based on trails from a vehicle changing the lane, then the estimated lanes would contradict this logic. Furthermore, a lane may not able to intersect with lane markings (excluding crossroads). Finally, it may be assumed that, depending on the location and the speed limit, estimated lanes will be within certain boundaries of curvature.

It will be understood that while it is described herein that cross checks are applied for road parts by explicitly comparing the lanes obtained from lane markings with those obtained from trails (as shown in Figs. 3A to 3G), also these cross checks may be applied to more complex situations such as crossroads. However, these cross-checks may not focus on, for example, whether lane changes are actually allowed, mandated, recommended or else, e.g., in a highway situation where three lanes are narrowed down to two lanes.

In order to get accurate and reliable lanes, the Lane Map Aggregation (LMA) may use an accurate localization system like a differential Global Positioning System (dGPS) as well as accurate lane detections e.g., from trail-based LiDAR sensor data object detection, as mentioned above. In other words, an accurate localization system may determine the position and pose of the recording vehicle with high accuracy in order to aggregate lanes from detected lane markings or trails into a global map and benefit from the increase in robustness from doing so. LiDAR sensors and dGPS may not be equipped in series production vehicles and both sensors may be costly. For example, a dGPS may be able to localize the vehicle up to a resolution of several centimeters but also may be one of the most expensive components in the vehicle. Beside the costs, such sensors may also require extensive training and time of skilled engineers to operate. To overcome those deficiencies, it may also be possible according to another embodiment to replace these sensors by low-cost (in other words: cost efficient) sensors, still retaining accurate lane estimations.

According to one embodiment the method of estimating lanes for a vehicle may be based on determining map-aggregated road lanes using a low-cost sensor system. Besides estimations of lanes based on camera data or LiDAR data, estimations of lanes based on data from e.g., a radar sensor, may provide a new source for estimating lanes. This may enable not only using different sensor sources for the estimation of lanes when aggregating a plurality of lanes but may also substantially increase the number of measurements to average over. This may result in more reliable lanes even when using a less sophisticated, low-cost sensor system. In essence, more and different lane estimates may allow to mitigate localizations errors of the low-cost system simply by gathering more statistics.

Accurate HD maps of lanes in the world may be costly to obtain and maintain. Ideally, such maps should be cost-efficient and easy to maintain. Creating such maps may make it necessary to aggregate the lane detections from various methods in a global map. Thus, in turn, a localization system may be desired which is as accurate as possible. Equipping a vehicle with an accurate localization system may be expensive. For example, a good off-the-shelf dGPS system with an inertial measurement unit (IMU) may be very expensive. Furthermore, it may be desired to install and maintain these systems by specifically trained engineers.

This cost may scale with the number of vehicles in the recording fleet that is used to generate the map. The statistics over which lane detections may be aggregated, and thereby the accuracy of the resulting map, may be limited by the number of vehicles that record. Thus, if the number of vehicles in the fleet is limited due to cost, this directly influences the accuracy.

It may also be possible to equip a vehicle with mostly low-cost sensors to perform the lane estimation, and a low-cost localization system, for example a regular GPS and simultaneous localization and mapping (SLAM), or regular GPS and a low-cost inertial measurement unti (IMU) to aggregate them in a map. Combining these low-cost sensors with extracting lane information also from lane markings and /or trails of other road users may lead to accurate lane estimations. The trails may be obtained from object detection methods running inside the vehicle. These object detection methods may operate on low-cost sensors, such as radar sensors and cameras instead of more expensive sensors like LiDAR sensors or sophisticated surround camera systems.

The lanes obtained may be cross-checked by physical sanity checks, for example of the trails of other road users. Jitter introduced from the sub-optimal localization system may be filtered out when aggregating the trails in the map. This may be done by making reasonable physical assumptions about the driving behavior of other vehicles, such as maximum accelerations, braking's, yaw rates and similar. Additionally, the trails of other vehicles coming out of the detection method may be first transformed into the global coordinate system (using the simple localization info available) and then may be tracked in this coordinate frame using a tracker. The use of the tracker after the data is transformed in the global map coordinate system may smooth and reduces the introduced jitter.

Similar to the above, physical sanity checks for the lanes obtained from a lane marking detection may be applied. Jitter from the localization system may be filtered out when aggregating the lane markings in the global coordinate system. This may be done by making reasonable physical assumptions about the driving behavior of the vehicle (using information such as vehicle velocity and yaw rate of the vehicle). This may allow to propagate the lane markings using a tracker to the expected next position and thereby reduce the introduced jitter.

A fusion between the lanes obtained from trails with the lanes obtained from lane markings as described above may be different than a simple tracking, as these physical constraints are applied on the ensemble of trails, rather than individual trajectories. This may be different than just applying a tracker with an underlying physical model for each tracked object. The same may apply for the aggregation of lane markings, where again physical sanity checks may be applied on the ensemble of lane markings to aggregate, in addition to any tracking of individual lane markings.

The method described herein may be applied not only with specially equipped test vehicles, but also to series production vehicles which may feature a lane detection system and an object detection system. In this way, potentially more statistics about lanes may be gathered, the accuracy may be increased and the costs may be further reduced.

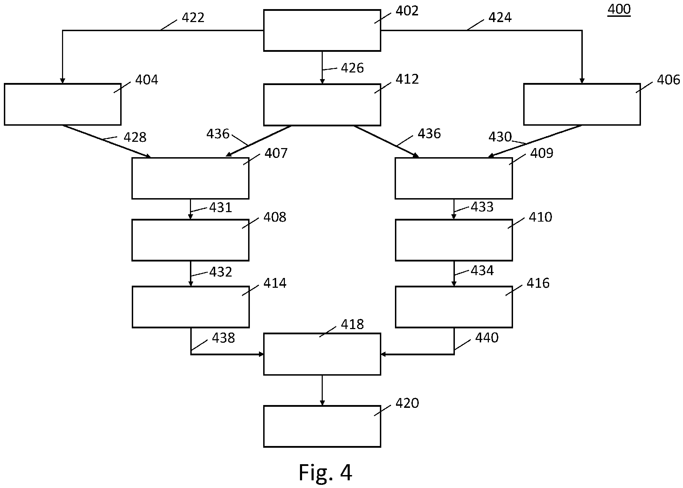

Fig. 4 shows a flow diagram 400 illustrating a method for estimating lanes for a vehicle based on transforming measurement data into a global coordinate system. The lane estimation may work carrying out the left side of Fig. 4 alone, comprising steps 402, 404, 407, 408, 412 and 414. It may also be possible to determine estimated lanes carrying out the right side of Fig. 4 alone, comprising steps 402, 406, 409, 410, 412 and 416. Another possibility may be to carry out all steps shown in Fig. 4, in accordance with the method described above, to determine final estimated lanes (step 420 in Fig. 4) at the location of the vehicle based on comparing (step 418 in Fig. 4) first preliminary estimate of lanes (steps 402, 404, 407, 408, 412 and 414 in Fig. 4) and the second preliminary estimate of lanes (steps 402, 406, 409, 410, 412 and 416 in Fig. 4). Each of the possibilities may be as described in detail as follows.

Starting with the left side of Fig. 4, in step 402, sensor data 422, 426 may be determined using a sensor or a plurality of sensors. The sensor, preferably a low-cost sensor, may be mounted at the vehicle or may be mounted at other recording vehicles that may be different from the vehicle. The vehicle and/or the other vehicles may be part of a fleet. The sensor data 422, 426 may be determined from several drives of the vehicle and/or from several drives of a plurality of recording vehicles. At 404, a position and a type of lane markings may be determined based on the sensor data 422. Therefore, an appropriate method may be used, e.g. an image recognition method with neural networks or classical methods not based on machine learning. The sensor data 422 may be determined using a camera and/or a forward-looking LiDAR sensor, or any other suitable sensor. At 412, a position and a pose of the vehicle may be determined in a world coordinate system based on sensor data 426. To determine the position and/or the pose of the vehicle, low-cost hardware such as a series GPS system (as may be equipped in almost all cars), or a combination of a series GPS system with an appropriate method such as an elaborate simultaneous localization and mapping (SLAM) may be used. SLAM systems may be based on camera sensors, LiDAR sensors, radar sensors, ordinary GPS sensors or a combination of those sensors. Alternatively, a combination of a series GPS system with inertial measurement unit (IMU) sensors or a combination of a series GPS system with SLAM and IMU may be used for a better performance. The selection of the sensor may depend on what is equipped in the vehicle. At 407 the lane markings estimate 428 may be transformed into a global coordinate system using position estimates 436. At 408, the lane markings estimate in global coordinates 431, obtained from a plurality of sensor data 422 and transformed into a global coordinate system, may be tracked using a tracker. In comparison with the method described above, the lane markings estimates are first transformed into the global coordinate system before doing the tracking. In this way, jitter from the low-cost localization system may be smoothed out. A plurality of lane markings described in global coordinates 432 may include uncertainty estimates of those lane markings (e.g. determined by a standard deviation method), wherein the uncertainty estimates for the lane markings may be determined, for example, by the tracker. At 414, the plurality of lane markings in global coordinates 432 may be aggregated, wherein the estimated uncertainties may be considered. In other words, the plurality of lane markings in global coordinates 432 may be combined from several drives of the vehicle and/or from several drives of multiple recording vehicles recorded at the same position 436 to determine a combined, more accurate estimate of the lane markings in global coordinates 432 at this position 436. The combined or aggregated lane markings may be used to estimate lanes 438 at the location for the vehicle based on the transformed measurement data.

Alternatively, the lane estimation may also be possible based on trails of other road users, mostly other vehicles around the vehicle. Therefore, at 402, sensor data 424, 426 may be determined using a sensor or a plurality of sensors. The sensor, preferably a low-cost sensor, may be mounted at the vehicle or may be mounted at other recording vehicles that may be different from the vehicle. The vehicle and/or the other vehicles may be part of a fleet. The sensor data 424, 426 may be determined from several drives of the vehicle and/or from several drives of a plurality of recording vehicles. At 406, objects, preferably other road users, which may be other vehicles or bicycles or the like, around the vehicle may be determined based on the sensor data 424. The sensor data 424 may be determined using a low-cost sensor, for example a radar sensor and/or a forward-looking LiDAR sensor, or any other suitable sensor. At 412, a position and a pose of the vehicle may be determined in a world coordinate system based on sensor data 426. To determine the position and/or the pose of the vehicle, low-cost hardware such as a series GPS system (as may be equipped in almost all cars), or a combination of a series GPS system with an appropriate method such as an elaborate simultaneous localization and mapping (SLAM) may be used. SLAM systems may be based on camera sensors, LiDAR sensors, radar sensors, ordinary GPS sensors or a combination of those sensors. Alternatively, a combination of a series GPS system with inertial measurement unit (IMU) sensors or a combination of a series GPS system with SLAM and IMU may be used for a better performance. The selection of the sensor may depend on what is equipped in the vehicle. At 409 the object estimates 430 may be transformed into a global coordinate system using position estimates 436. At 410, the object estimates in global coordinates 433, determined from a plurality of sensor data 424 and transformed into a global coordinate system, may be tracked using a tracker. Thus, object trajectories or trails of the other road users, preferably other vehicles, may be determined. In comparison with the method described above, the trail estimates are first transformed into the global coordinate system before doing the tracking. In this way, jitter from the low-cost localization system may be smoothed out. A plurality of trails in global coordinates 434 may include uncertainty estimates of those trails (e.g. determined by a standard deviation method), wherein the uncertainty estimates for the trails may be determined, for example, by the tracker. At 416, the plurality of trails in global coordinates 434 may be aggregated, wherein the estimated uncertainties may be considered. In other words, the plurality of trails in global coordinates 434 may be combined from several drives of the vehicle and/or from several drives of multiple recording vehicles recorded at the same position 436 to determine a combined, more accurate estimate of where other road users have driven at this position 436. The combined or aggregated trails may be used to estimate lanes 440 at the location for the vehicle based on the transformed measurement data.

Combining the aforementioned estimations of lanes based on lane markings and based on trails to determine final estimated lanes 420 at the location of the vehicle may lead to a more robust estimation of lanes as described above. Therefore, at 418, the estimates of lanes 438 from lane markings and the estimates of lanes 440 from trails may be compared. The estimates of lanes 438 may indicate where lanes are according to the available information about lane markings. The estimates of lanes 440 from trails may give an indication on where other road users have driven and thereby may give a hint on which lane might actually be usable. By combining the two methods, i.e. combining estimates of lanes based on a plurality of lane markings and estimates of lanes based on a plurality of trails, an accurate position of lanes (by lane markings) together with the information whether these lanes can actually be used may be received. Combining the estimations of lanes based on lane markings and estimations of lanes based on trails may be done by cross checks as described above.

With the method described herein, it may be possible to use a low-cost sensor setup, especially for the localization, in recording vehicles and still obtaining reliable estimates of lanes by extracting lane markings and/or lanes from trails e.g., based on radar detections, and doing various cross checks. Low-cost sensors may be off-the-shelf sensors. For example, it may be possible to use even the sensor setup of series production vehicles for the given purpose.

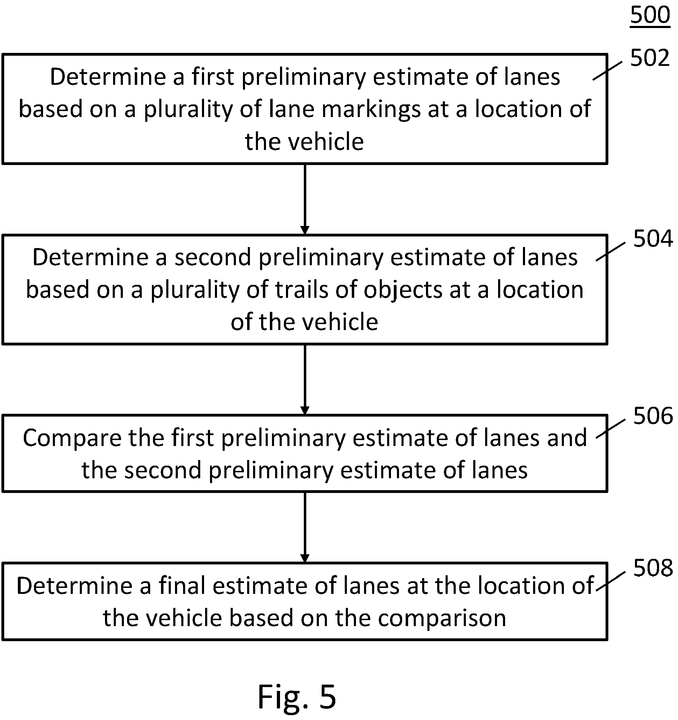

Fig. 5 shows a flow diagram 500 illustrating a method for estimating lanes for a vehicle according to various embodiments. At 502, a first preliminary estimate of lanes is determined based on a plurality of lane markings at a location of the vehicle. At 504, a second preliminary estimate of lanes is determined based on a plurality of trails of objects at the location of the vehicle. At 506, the first preliminary estimate of lanes and the second preliminary estimate of lanes are compared. At 508, a final estimate of lanes at the location of the vehicle is determined based on the comparing.

According to an embodiment, the plurality of trails of the objects may be determined based on second sensor data, wherein the second sensor data may be determined using a second sensor, wherein preferably the second sensor may comprise a camera or a radar sensor or a LiDAR sensor.

According to an embodiment, the method may further comprise the following step carried out by the computer hardware components: determining the location of the vehicle.

According to an embodiment, the location of the vehicle may be determined based on simultaneous localization and mapping and/or a GPS system and/or a dGPS system and/or an inertial measurement unit.

According to an embodiment, the method may further comprise the following step carried out by the computer hardware components: detecting a pose of the vehicle in a world coordinate system.

According to an embodiment, the method may further comprise the following step carried out by the computer hardware components: estimating uncertainties of the first preliminary estimate of lanes and/or of the second preliminary estimate of lanes.

According to an embodiment, the plurality of lane markings may be determined from several drives of the vehicle and/or from several drives of a plurality of recording vehicles.

According to an embodiment, the plurality of trails may be determined from several drives of the vehicle and/or from several drives of a plurality of recording vehicles.

According to an embodiment, the method may further comprise the following step carried out by the computer hardware components: checking a first plausibility of the first preliminary estimate of lanes and/or checking a second plausibility of the second preliminary estimate of lanes, wherein the first plausibility and/or the second plausibility may be based on geometric relations and/or rules.

According to an embodiment, a number of trails in the plurality of trails of objects may be above a predetermined trail threshold.

According to an embodiment, a number of lane markings in the plurality of lane markings may be above a predetermined lane marking threshold.

Each of the steps 502, 504, 506, 508, and the further steps described above may be performed by computer hardware components.

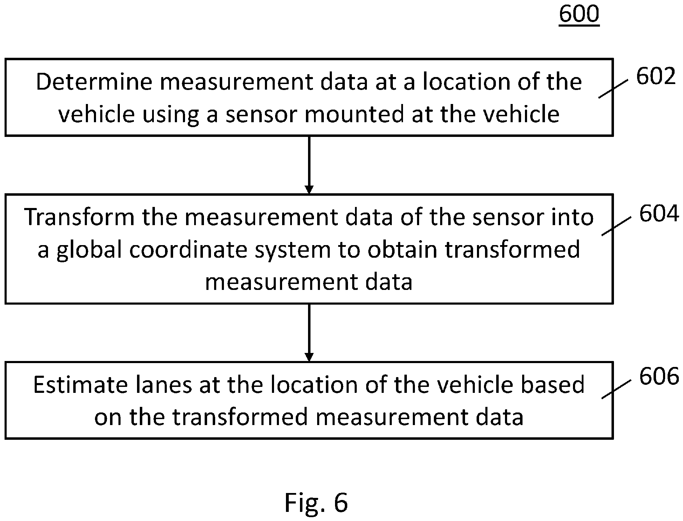

Fig. 6 shows a flow diagram 600 illustrating a method for estimating lanes for a vehicle according to examples not falling under the claimed invention. At 602, measurement data may be determined at a location of the vehicle using a sensor mounted at the vehicle. At 604, the measurement data of the sensor may be transformed into a global coordinate system to obtain transformed measurement data. At 606, lanes may be estimated at the location of the vehicle based on the transformed measurement data.

According to an embodiment, the measurement data may comprise estimates for lane markings.

According to an embodiment, the measurement data may comprise estimates for trails of objects.

According to an embodiment, the measurement data may be determined from several drives of the vehicle and/or from several drives of a plurality of recording vehicles.

According to an embodiment, the sensor may comprise a radar sensor and/or a camera.

According to an embodiment, the method may further comprise the following step carried out by the computer hardware components: determining the location of the vehicle.

According to an embodiment, the determining of the location of the vehicle may be based on simultaneous localization and mapping and/or a GPS system and/or a dGPS system and/or an inertial measurement unit.

According to an embodiment, the method may further comprise the following step carried out by the computer hardware components: checking a plausibility of the lanes, wherein the plausibility may be based on physical assumptions regarding a driving behavior of the vehicle and/or physical assumptions regarding a driving behavior of other vehicles.

According to an embodiment, the physical assumptions regarding the driving behavior of the vehicle may comprise assumptions regarding a velocity of the vehicle and/or assumptions regarding a yaw-rate of the vehicle.

According to an embodiment, the physical assumptions regarding the driving behavior of the other vehicles may comprise an acceleration assumption of the other vehicles and/or a braking assumption of the other vehicles and/or a yaw-rate assumption of the other vehicles.

According to an embodiment, the method may further comprise the following step carried out by the computer hardware components: estimating uncertainties of the transformed measurement data.

According to an embodiment, the lanes may be estimated further based on weights with a confidence value.

Each of the steps 502, 504, 506, 508, and the further steps described above may be performed by computer hardware components.

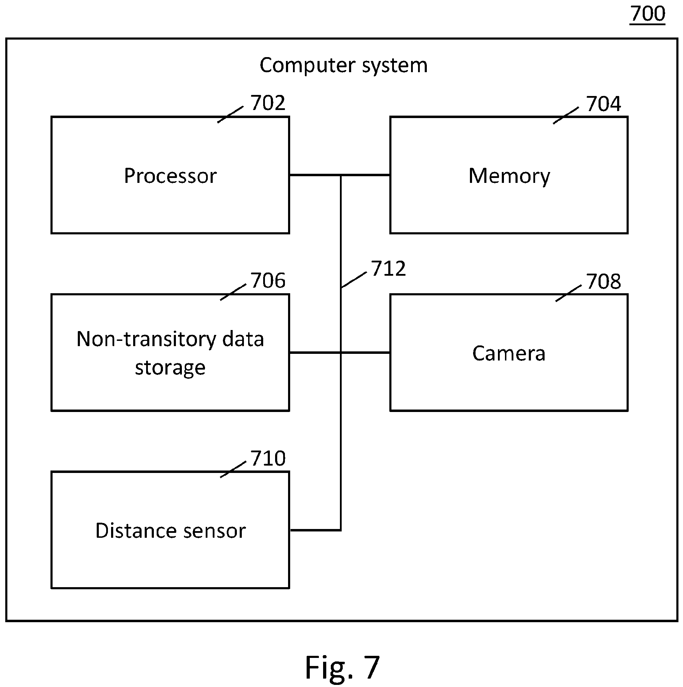

Fig. 7 shows a computer system 700 with a plurality of computer hardware components configured to carry out steps of a computer implemented method for estimating lanes for a vehicle according to various embodiments. The computer system 700 may include a processor 702, a memory 704, and a non-transitory data storage 706. A camera 708 and/or a distance sensor 710 (for example a radar sensor and/or a LiDAR sensor) may be provided as part of the computer system 700 (like illustrated in Fig. 7), or may be provided external to the computer system 700.

The processor 702 may carry out instructions provided in the memory 704. The non-transitory data storage 706 may store a computer program, including the instructions that may be transferred to the memory 704 and then executed by the processor 702. The camera 708 and/or the distance sensor 710 may be used to determine input data, for example measurement data and/or sensor data that is provided to the methods described herein.

The processor 702, the memory 704, and the non-transitory data storage 706 may be coupled with each other, e.g. via an electrical connection 712, such as e.g. a cable or a computer bus or via any other suitable electrical connection to exchange electrical signals. The camera 708 and/or the distance sensor 710 may be coupled to the computer system 700, for example via an external interface, or may be provided as parts of the computer system (in other words: internal to the computer system, for example coupled via the electrical connection 712).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 700.

Reference numeral list

100 flow diagram illustrating a method for estimating lanes for a vehicle according to various embodiments

101 flow diagram illustrating a method for estimating lanes for a vehicle comparing a first preliminary estimate of lanes and a second preliminary estimate of lanes

102 step of determining sensor data

104 step of determining lane markings

106 step of determining objects

108 step of tracking lane markings

110 step of tracking trails of the objects

112 step of determining position and pose of the vehicle

114 step of aggregating the lane markings

115 step of estimating lanes from lane markings

116 step of aggregating the trails

117 step of estimating lanes from trails

118 step of comparing lanes from lane markings and lanes from trails

120 step of determining a final estimate of lanes

122 sensor data

124 sensor data

126 sensor data

128 lane markings estimate

130 object estimates

132 plurality of lane markings

134 plurality of trails

136 position estimates

138 first preliminary estimate of lanes

140 second preliminary estimate of lanes

200 flow diagram illustrating a comparison of a first preliminary estimate of lanes and a second preliminary estimate of lanes

202 request for second preliminary estimate of lanes based on trails

204 step of termination

206 request for first preliminary estimate of lanes based on lane markings

208 step of determining a final estimate of lanes based on second preliminary estimate of lanes

210 step of determining a final estimate of lanes based on first preliminary estimate of lanes and second preliminary estimate of lanes

212 final estimated lanes with confidence value

302 vehicle

304 moving vehicle for trails

306 static vehicle

308 lane marking

310 lane with direction

312 obstacle

400 flow diagram illustrating a method for estimating lanes for a vehicle based on transforming measurement data into a global coordinate system

402 step of determining sensor data

404 step of determining lane markings

406 step of determining objects

407 step of transforming data into a global coordinate system

408 step of tracking lane markings

409 step of transforming data into a global coordinate system

410 step of tracking trails of the objects

412 step of determining position and pose of the vehicle

414 step of aggregating the lane markings

416 step of aggregating the trails

418 step of comparing lanes from lane markings and lanes from trails

420 step of determining a final estimate of lanes

422 sensor data

424 sensor data

426 sensor data

428 lane markings estimate

430 object estimates

431 lane markings estimate in global coordinates

432 plurality of lane markings in global coordinates

433 object estimate in global coordinates

434 plurality of trails in global coordinates

436 position estimates

438 estimates of lanes

440 estimates of lanes

500 flow diagram illustrating a method for estimating lanes for a vehicle according to various embodiments

502 step of determining a first preliminary estimate of lanes based on a plurality of lane markings at a location of the vehicle

504 step of determining a second preliminary estimate of lanes based on a plurality of trails of objects at a location of the vehicle

506 step of comparing the first preliminary estimate of lanes and the second preliminary estimate of lanes

508 step of determining a final estimate of lanes at the location of the vehicle based on the comparison

600 flow diagram illustrating a method for estimating lanes for a vehicle according to various embodiments

602 step of determining measurement data at a location of the vehicle using a sensor mounted at the vehicle

604 step of transforming the measurement data of the sensor into a global coordinate system to obtain transformed measurement data

606 step of estimating lanes at the location of the vehicle based on the transformed measurement data

700 computer system according to various embodiments

702 processor

704 memory

706 non-transitory data storage

708 camera

710 distance sensor

712 connection

**Claims**

1. Computer implemented method for estimating lanes for a vehicle (302), the method comprising the following steps carried out by computer hardware components:

   - determining (502) a first preliminary estimate of lanes (138) based on a plurality of lane markings (132) at a location (136) of the vehicle (302);
   - determining (504) a second preliminary estimate of lanes (140) based on a plurality of trails (134) of other road users at the location (136) of the vehicle (302);
   - comparing (506) the first preliminary estimate of lanes (138) and the second preliminary estimate of lanes (140), wherein the comparing (506) comprises a lane cross check of the first preliminary estimate of lanes (138) and the second preliminary estimate of lanes (140) to obtain information of which lanes are actually drivable, non-blocked, and/or obstacle-free; and
   - determining (508) a final estimate of lanes at the location (136) of the vehicle (302), including information whether these lanes may actually be used, based on the comparing (506).

2. The method of claim 1, wherein the plurality of lane markings (132) are determined based on first sensor data (122), wherein the first sensor data (122) is determined using a first sensor, wherein preferably the first sensor comprises a camera (708) or a LiDAR sensor (710).

3. The method of at least one of claims 1 or 2, wherein the plurality of trails (134) of the other road users are determined based on second sensor data (124), wherein the second sensor data (124) is determined using a second sensor, wherein preferably the second sensor comprises a camera (708) or a radar sensor (710) or a LiDAR sensor (710).

4. The method of at least one of claims 1 to 3, further comprising the following step carried out by the computer hardware components:

   - determining the location (136) of the vehicle (302).

5. The method of claim 4, wherein the location (136) of the vehicle (302) is determined based on simultaneous localization and mapping and/or a GPS system and/or a dGPS system and/or an inertial measurement unit.

6. The method of at least one of claims 1 to 5, further comprising the following step carried out by the computer hardware components:

   - detecting a pose of the vehicle (302) in a world coordinate system.

7. The method of at least one of claims 1 to 6, further comprising the following step carried out by the computer hardware components:

   - estimating uncertainties of the first preliminary estimate of lanes (138) and/or of the second preliminary estimate of lanes (140).

8. The method of at least one of claims 1 to 7, wherein the plurality of lane markings (132) are determined from several drives of the vehicle (302) and/or from several drives of a plurality of recording vehicles (304).

9. The method of at least one of claims 1 to 8, wherein the plurality of trails (134) are determined from several drives of the vehicle (302) and/or from several drives of a plurality of recording vehicles (304).

10. The method of at least one of claims 1 to 9, further comprising the following step carried out by the computer hardware components:

    - checking a first plausibility of the first preliminary estimate of lanes (138) and/or checking a second plausibility of the second preliminary estimate of lanes (140), wherein the first plausibility and/or the second plausibility are based on geometric relations and/or rules.

11. The method of at least one of claims 1 to 10, wherein a number of trails in the plurality of trails (134) of other road users is above a predetermined trail threshold.

**12.** The method of at least one of claims 1 to 11, wherein a number of lane markings in the plurality of lane markings (132) is above a predetermined lane marking threshold.

**13.** Computer system (700), the computer system (700) comprising a plurality of computer hardware components configured to carry out the steps of the computer implemented method of at least one of claims 1 to 12.

**14.** Vehicle (302), comprising the computer system (700) of claim 13 and at least one sensor, wherein the plurality of lane markings (132) and/or the plurality of trails (134) are determined based on an output of the at least one sensor.

**15.** Non-transitory computer readable medium (706) comprising instructions for carrying out the computer implemented method of at least one of claims 1 to 12.

**Patentansprüche**

**1.** Durch einen Computer realisiertes Verfahren zum Schätzen von Fahrspuren für ein Fahrzeug (302), wobei das Verfahren die folgenden Schritte umfasst, die durch Computerhardwarekomponenten ausgeführt werden:

    - Ermitteln (502) einer ersten vorläufigen Schätzung von Fahrspuren (138) basierend auf einer Vielzahl von Fahrspurmarkierungen (132) an einem Ort (136) des Fahrzeugs (302);
    - Ermitteln (504) einer zweiten vorläufigen Schätzung von Fahrspuren (140) basierend auf einer Vielzahl von Pfaden (134) anderer Verkehrsteilnehmer an dem Ort (136) des Fahrzeugs (302);
    - Vergleichen (506) der ersten vorläufigen Schätzung von Fahrspuren (138) und der zweiten vorläufigen Schätzung von Fahrspuren (140), wobei das Vergleichen (506) eine Fahrspurkreuzungsüberprüfung der ersten vorläufigen Schätzung von Fahrspuren (138) und der zweiten vorläufigen Schätzung von Fahrspuren (140) umfasst, um eine Information bezüglich dessen zu erhalten, welche Fahrspuren tatsächlich befahrbar, nicht blockiert und/oder hindernisfrei sind; und
    - Ermitteln (508) einer endgültigen Schätzung von Fahrspuren an dem Ort (136) des Fahrzeugs (302), einschließlich einer Information bezüglich dessen, ob diese Fahrspuren tatsächlich verwendet werden können, basierend auf dem Vergleichen (506).

**2.** Verfahren nach Anspruch 1,

wobei die Vielzahl von Fahrspurmarkierungen (132) basierend auf ersten Sensordaten (122) ermittelt wird, wobei die ersten Sensordaten (122) unter Verwendung eines ersten Sensors ermittelt werden, wobei der erste Sensor vorzugsweise eine Kamera (708) oder einen LiDAR-Sensor (710) umfasst.

**3.** Verfahren nach zumindest einem der Ansprüche 1 oder 2,
wobei die Vielzahl von Pfaden (134) der anderen Verkehrsteilnehmer basierend auf zweiten Sensordaten (124) ermittelt wird, wobei die zweiten Sensordaten (124) unter Verwendung eines zweiten Sensors ermittelt werden, wobei der zweite Sensor vorzugsweise eine Kamera (708) oder einen Radarsensor (710) oder einen LiDAR-Sensor (710) umfasst.

**4.** Verfahren nach zumindest einem der Ansprüche 1 bis 3, ferner umfassend den folgenden Schritt, der durch die Computerhardwarekomponenten ausgeführt wird:

    - Ermitteln des Orts (136) des Fahrzeugs (302).

**5.** Verfahren nach Anspruch 4,
wobei der Ort (136) des Fahrzeugs (302) basierend auf einer gleichzeitigen Lokalisierung und Kartierung und/oder einem GPS-System und/oder einem dGPS-System und/oder einer Trägheitsmesseinheit ermittelt wird.

**6.** Verfahren nach zumindest einem der Ansprüche 1 bis 5, ferner umfassend den folgenden Schritt, der durch die Computerhardwarekomponenten ausgeführt wird:

    - Detektieren einer Stellung des Fahrzeugs (302) in einem Weltkoordinatensystem.

**7.** Verfahren nach zumindest einem der Ansprüche 1 bis 6, ferner umfassend den folgenden Schritt, der durch die Computerhardwarekomponenten ausgeführt wird:

    - Schätzen von Unsicherheiten der ersten vorläufigen Schätzung von Fahrspuren (138) und/oder der zweiten vorläufigen Schätzung von Fahrspuren (140).

**8.** Verfahren nach zumindest einem der Ansprüche 1 bis 7,
wobei die Vielzahl von Fahrspurmarkierungen (132) aus mehreren Fahrten des Fahrzeugs (302) und/oder aus mehreren Fahrten einer Vielzahl von Aufzeichnungsfahrzeugen (304) ermittelt wird.

**9.** Verfahren nach zumindest einem der Ansprüche 1 bis 8,
wobei die Vielzahl von Pfaden (134) aus mehreren Fahrten des Fahrzeugs (302) und/oder aus mehreren Fahrten einer Vielzahl von Aufzeichnungsfahrzeugen (304) ermittelt wird.

10. Verfahren nach zumindest einem der Ansprüche 1 bis 9, ferner umfassend den folgenden Schritt, der durch die Computerhardwarekomponenten ausgeführt wird:

- Überprüfen einer ersten Plausibilität der ersten vorläufigen Schätzung von Fahrspuren (138) und/oder Überprüfen einer zweiten Plausibilität der zweiten vorläufigen Schätzung von Fahrspuren (140), wobei die erste Plausibilität und/oder die zweite Plausibilität auf geometrischen Beziehungen und/oder Regeln basieren.

11. Verfahren nach zumindest einem der Ansprüche 1 bis 10,
wobei eine Anzahl von Pfaden der Vielzahl von Pfaden (134) anderer Verkehrsteilnehmer über einem vorbestimmten Pfadschwellenwert liegt.

12. Verfahren nach zumindest einem der Ansprüche 1 bis 11,
wobei eine Anzahl von Fahrspurmarkierungen der Vielzahl von Fahrspurmarkierungen (132) über einem vorbestimmten Fahrspurmarkierungsschwellenwert liegt.

13. Computersystem (700), wobei das Computersystem (700) eine Vielzahl von Computerhardwarekomponenten umfasst, die ausgestaltet sind, um die Schritte des durch einen Computer realisierten Verfahrens nach zumindest einem der Ansprüche 1 bis 12 auszuführen.

14. Fahrzeug (302), umfassend das Computersystem (700) nach Anspruch 13 und zumindest einen Sensor, wobei die Vielzahl von Fahrspurmarkierungen (132) und/oder die Vielzahl von Pfaden (134) basierend auf einem Ausgang des zumindest einen Sensors ermittelt werden.

15. Nichtflüchtiges von einem Computer lesbares Medium (706), umfassend Anweisungen zum Ausführen des durch einen Computer realisierten Verfahrens nach zumindest einem der Ansprüche 1 bis 12.

**Revendications**

1. Procédé mis en œuvre par ordinateur destiné à estimer des voies (302) pour un véhicule,
le procédé comprenant les étapes suivantes exécutées par des composants matériels d'ordinateur :

- déterminer (502) une première estimation préliminaire de voies (138) sur la base d'une pluralité de marquages de voies (132) à un emplacement (136) du véhicule (302) ;
- déterminer (504) une seconde estimation préliminaire de voies (140) sur la base d'une pluralité de pistes (134) d'autres usagers de la route à l'emplacement (136) du véhicule (302) ;
- comparer (506) la première estimation préliminaire de voies (138) et la seconde estimation préliminaire de voies (140), la comparaison (506) comprenant une vérification de croisement de voies de la première estimation préliminaire de voies (138) et de la seconde estimation préliminaire de voies (140) pour obtenir des informations sur quelles voies peuvent être réellement empruntées, ne sont pas bloquées et/ou sont sans obstacles ; et
- déterminer (508) une estimation finale de voies à l'emplacement (136) du véhicule (302), incluant des informations quant à savoir si oui ou non ces voies peuvent être réellement utilisées, sur la base de la comparaison (506).

2. Procédé selon la revendication 1,
dans lequel la pluralité de marquages de voies (130) sont déterminés sur la base de premières données de capteur (122), dans lequel les premières données de capteur (122) sont déterminées à l'aide d'un premier capteur, dans lequel de préférence le premier capteur comprend une caméra (708) ou un capteur lidar (710).

3. Procédé selon l'une au moins des revendications 1 ou 2,
dans lequel la pluralité de pistes (134) des autres usagers de la route sont déterminées sur la base de secondes données de capteur (12), dans lequel les secondes données de capteur (124) sont déterminées à l'aide d'un second capteur, dans lequel le second capteur comprend une caméra (708) ou un capteur radar (710) ou un capteur lidar (710).

4. Procédé selon l'une au moins des revendications 1 à 3, comprenant en outre l'étape suivante exécutée par les composants matériels d'ordinateur :

- déterminer l'emplacement (136) du véhicule (302).

5. Procédé selon la revendication 4,
dans lequel l'emplacement (136) du véhicule (302) est déterminé sur la base d'une localisation et cartographie simultanées et/ou d'un système GPS et/ou d'un système dGPS et/ou d'une unité de mesurage d'inertie,

6. Procédé selon l'une au moins des revendications 1 à 5, comprenant en outre l'étape suivante exécutée par les composants matériels d'ordinateur :

- détecter une pose du véhicule (302) dans un système de coordonnées mondial.

7. Procédé selon l'une au moins des revendications 1 à 6, comprenant en outre l'étape suivante exécutée par les composants matériels d'ordinateur :

- estimer des incertitudes de la première estimation préliminaire de voies (138) et/ou de la seconde estimation préliminaire de voies (140).

8. Procédé selon l'une au moins des revendications 1 à 7,
dans lequel la pluralité de marquages de voies (132) sont déterminés à partir de plusieurs trajets du véhicule (302) et/ou à partir de plusieurs trajets d'une pluralité de véhicules d'enregistrement (304).

9. Procédé selon l'une au moins des revendications 1 à 8,
dans lequel la pluralité des pistes (134) sont déterminées à partir de plusieurs trajets du véhicule (302) et/ou à partir de plusieurs trajets d'une pluralité de véhicules d'enregistrement (304).

10. Procédé selon l'une au moins des revendications 1 à 9, comprenant en outre l'étape suivante exécutée par les composants matériels d'ordinateur :

- vérification une première plausibilité de la première estimation préliminaire de voies (138) et/ou vérifier une seconde plausibilité de la seconde estimation préliminaire de voies (140), la première plausibilité et/ou la seconde plausibilité étant basées sur des relations géométriques et/ou des règles.

11. Procédé selon l'une au moins des revendications 1 à 10,
dans lequel un nombre de pistes dans la pluralité de pistes (134) d'autres usagers de la route est au-dessus d'un seuil de pistes prédéterminé.

12. Procédé selon l'une au moins des revendications 1 à 11,
dans lequel un nombre de marquages de voies dans la pluralité de marquages de voies (132) est au-dessus d'un seuil de marquages de voies prédéterminé.

13. Système d'ordinateur (700), le système d'ordinateur (700) comprenant une pluralité de composants matériels d'ordinateur configurés pour exécuter les étapes du procédé mis en œuvre par ordinateur selon l'une au moins des revendications 1 à 12.

14. Véhicule (302), comprenant le système d'ordinateur (700) selon la revendication 13 et au moins un capteur, dans lequel la pluralité de marquages de voies (132) et/ou la pluralité de pistes (134) sont déterminés sur la base d'une sortie dudit au moins un capteur.

15. Support non transitoire lisible par ordinateur (706) comprenant des instructions destinées à exécuter le procédé mis en œuvre par ordinateur selon l'une au moins des revendications 1 à 12.

Fig. 1A

Fig. 1B

Fig. 2

Fig. 3A

Fig. 3B

Fig. 3C

Fig. 3D

Fig. 3E

Fig. 3F

Fig. 3G

Fig. 4

_500_

Determine a first preliminary estimate of lanes based on a plurality of lane markings at a location of the vehicle — 502

Determine a second preliminary estimate of lanes based on a plurality of trails of objects at a location of the vehicle — 504

Compare the first preliminary estimate of lanes and the second preliminary estimate of lanes — 506

Determine a final estimate of lanes at the location of the vehicle based on the comparison — 508

Fig. 5

<u>600</u>

| Determine measurement data at a location of the vehicle using a sensor mounted at the vehicle | 602 |

↓

| Transform the measurement data of the sensor into a global coordinate system to obtain transformed measurement data | 604 |

↓

| Estimate lanes at the location of the vehicle based on the transformed measurement data | 606 |

Fig. 6

700

Computer system

Processor 702

Memory 704

Non-transitory data storage 706

712

Camera 708

Distance sensor 710

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A Lidar-based Dual-level Virtual Lanes Construction and Anticipation of Specific Raad Infrastructure Events for Autonomous Driving. **UZER FERIT et al.** IEEE INTELLIGENT VEHICLES SYMPOSIUM (IV). IEEE, 09 June 2019, 214-219